# EUROPÄISCHE PATENTANMELDUNG

(11) **EP 1 902 905 A2**
(43) Veröffentlichungstag der Anmeldung: **26.03.2008**
(21) Anmeldenummer: 07113128.8
(22) Anmeldetag: 25.07.2007
(51) Int. Cl.: B60R 16/02, H02J 7/14

(54) **Verfahren und Vorrichtung zur Stabilisierung der Betriebsspannung in einem Kraftfahrzeug-Bordnetz**

(30) Priorität: 21.09.2006 DE 102006044426
(71) Anmelder: Robert Bosch GmbH, 70442 Stuttgart (DE)
(72) Erfinder: Beck, Markus, 71711, Steinheim (DE); Moosmann, Bernd, 78144, Tennenbronn (DE)

(57) **Zusammenfassung**

Die Erfindung betrifft ein Verfahren und eine Vorrichtung zur Stabilisierung der Betriebsspannung in einem Kraftfahrzeug-Bordnetz. Dabei erfolgt eine Detektion der momentanen Leistungsfähigkeit der zur Versorgung des Bordnetzes vorgesehenen Batterie. Reicht die momentane Leistungsfähigkeit der Batterie nicht aus, um im Fahrbetrieb die Spitzenlasten der elektrischen Systeme des Bordnetzes zu puffern, wird ein Notlaufbetrieb eingeleitet, in welchem eine Erhöhung der Regeldynamik des Generators des Bordnetzes erfolgt. Vorzugsweise werden zur weiteren Stabilisierung der Betriebsspannung zusätzlich eine Anhebung der Generatorsollspannung um einen vorgegebenen Spannungswert sowie eine Anhebung der Grundlast des Generators durch Zuschaltung eines weiteren Verbrauchers durchgeführt.

## Beschreibung

Die Erfindung betrifft ein Verfahren und eine Vorrichtung zur Stabilisierung der Betriebsspannung in einem Kraftfahrzeug-Bordnetz.

### Stand der Technik

Kraftfahrzeug-Energiebordnetze weisen einen Generator, eine Batterie und elektrische Verbraucher auf. Eine Versorgung von Verbrauchern mit kurzzeitigen Leistungsspitzen von über 500 W ist nur durch die Batterie möglich, da ein Generator typischerweise nicht ausreichend schnell auf einen veränderten Leistungsbedarf reagieren kann.

Die Batterien der Kraftfahrzeuge sind nach aktuellen Pannenstatistiken deutscher Automobilclubs die häufigste Pannenursache. Bei einem Ausfall der Fahrzeugbatterie erfolgt die Versorgung der Verbraucher im Wesentlichen nur noch durch den Generator. Dies hat zur Folge, dass die Betriebsspannung des Fahrzeugs, d. h. die Bordnetzspannung, im Falle einer Zuschaltung eines zusätzlichen Verbrauchers stark einbricht. Dies wiederum hat zur Folge, dass sich auch andere Steuergeräte und Teilsysteme des Fahrzeugs abschalten und nicht mehr zur Verfügung stehen. Davon können auch sicherheitsrelevante Verbraucher betroffen sein.

Aus der DE 101 55 670 A1 ist bereits ein Verfahren zur Stabilisierung der Versorgungsspannung in einem Energieversorgungssystem, insbesondere in einem Kraftfahrzeug-Bordnetz, bekannt. Das Bordnetz wird von einer Batterie, an der mehrere Verbraucher angeschlossen sind, und einem Generator gespeist. Bei diesem bekannten Verfahren erfolgt ein hilfsweises Einschalten eines elektrischen Verbrauchers, um die vom Generator gelieferte Leistung zu erhöhen, sowie ein Ausschalten des hilfsweise zugeschalteten Verbrauchers, wenn eine Versorgungsspannung unter einem vorgegebenen Wert absinkt oder durch Einschalten eines neuen Verbrauchers absinken würde.

Aus der DE 102 51 590 A1 sind ein Verfahren und eine Vorrichtung zur Erkennung eines batterielosen Fahrzeugbetriebes bekannt. Das Kraftfahrzeug-Bordnetz weist wenigstens einen von einem Motor angetriebenen Generator, eine Batterie, mit der Batterie verbindbare Verbraucher und eine Recheneinheit auf. Die Recheneinheit steht über Verbindungsmittel mit dem Steuergerät des Fahrzeugs in Verbindung und tauscht mit diesem Informationen oder Daten aus. Weiterhin greift die Recheneinheit auf die vom Steuergerät bereitgestellten Informationen zu und ermittelt aus diesen Informationen, die die Bordnetzspannung und/oder die Batteriespannung betreffen, Kenngrößen oder Korrekturfaktoren, die zur Erkennung des batterielosen Betriebes ausgewertet werden.

Aus der DE 103 46 856 A1 sind ein Verfahren und eine Vorrichtung zur Regelung eines zur Spannungsversorgung eines Fahrzeug-Bordnetzes vorgesehenen Generators bekannt. Bei diesem Verfahren wird bei einem Erkennen der Notwendigkeit einer Aufladung einer das Bordnetz speisenden Fahrzeugbatterie die Bordnetzsollspannung vergrößert und bei einem Erkennen des Vorliegens einer ausreichenden Ladung der Fahrzeugbatterie die Bordnetzsollspannung verkleinert.

### Vorteile der Erfindung

Ein Verfahren mit den im Anspruch 1 angegebenen Merkmalen weist demgegenüber den Vorteil auf, dass beim Erkennen einer Fahrzeugbatterie, die nicht mehr ausreichend leistungsfähig ist, um im Fahrbetrieb die Spitzenlasten der elektrischen Systeme des Bordnetzes zu puffern, die Regeldynamik des Generators in einem Schritt oder schrittweise solange erhöht wird, bis wieder eine ausreichend leistungsfähige Batterie vorliegt. Dann wird die Regeldynamik des Generators wieder auf ihren ursprünglichen Wert herabgesetzt. Durch diese Maßnahmen wird sichergestellt, dass eine ausreichende Leistungsfähigkeit der Batterie durch Regeneration oder Werkstatttausch wiederhergestellt werden kann. Dies erfolgt vorzugsweise durch eine Veränderung der Taktvorgabe für den Generator und eine Herabsetzung der Zeitkonstante eines dem Taktgeber nachgeschalteten Filters.

Als zusätzliche Maßnahme erfolgt bei Bedarf eine Anhebung der Generatorsollspannung. Diese kann entweder ebenfalls schrittweise erfolgen oder in Form eines einzigen Schrittes, bei welchem die Generatorsollspannung auf einen vorgegebenen Wert, vorzugsweise auf ihren Maximalwert, gesetzt wird.

Als weitere zusätzliche Maßnahme wird bei Bedarf eine Anhebung der Grundlast des Generators vorgenommen. Zu diesem Zwecke werden ein oder mehrere momentan nicht benötigte, nicht sicherheitsrelevante Verbraucher zugeschaltet, beispielsweise die Heckscheibenheizung und weitere Heizelemente oder Verbraucher, deren Leistung langsam oder stufenförmig gesteigert werden kann, beispielsweise ein PTC-Zuheizer oder ein Kühlerlüfter.

Alle vorgenannten Maßnahmen wirken stabilisierend auf die Betriebsspannung, wenn eine neue Last zugeschaltet wird.

Weitere vorteilhafte Eigenschaften der Erfindung ergeben sich aus deren nachfolgender Erläuterung anhand der Zeichnung.

### Zeichnung

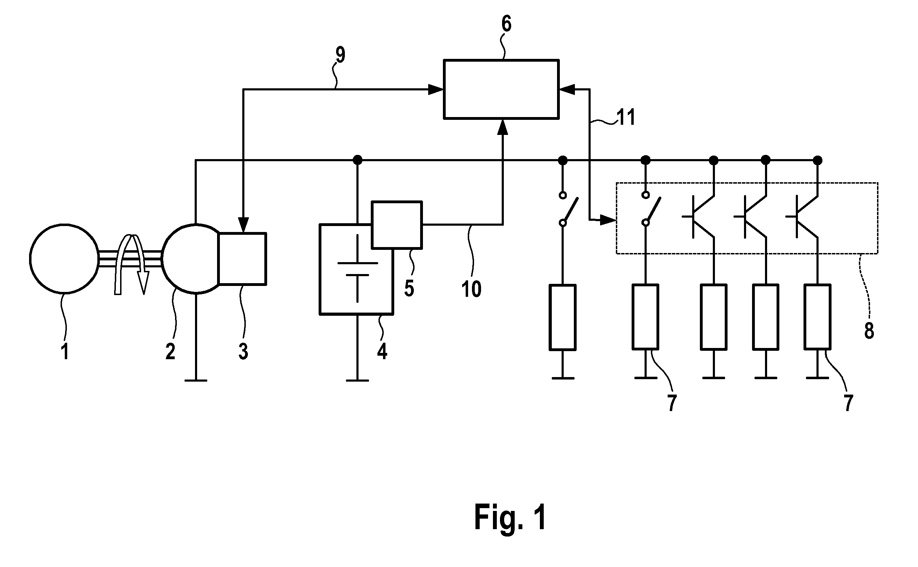

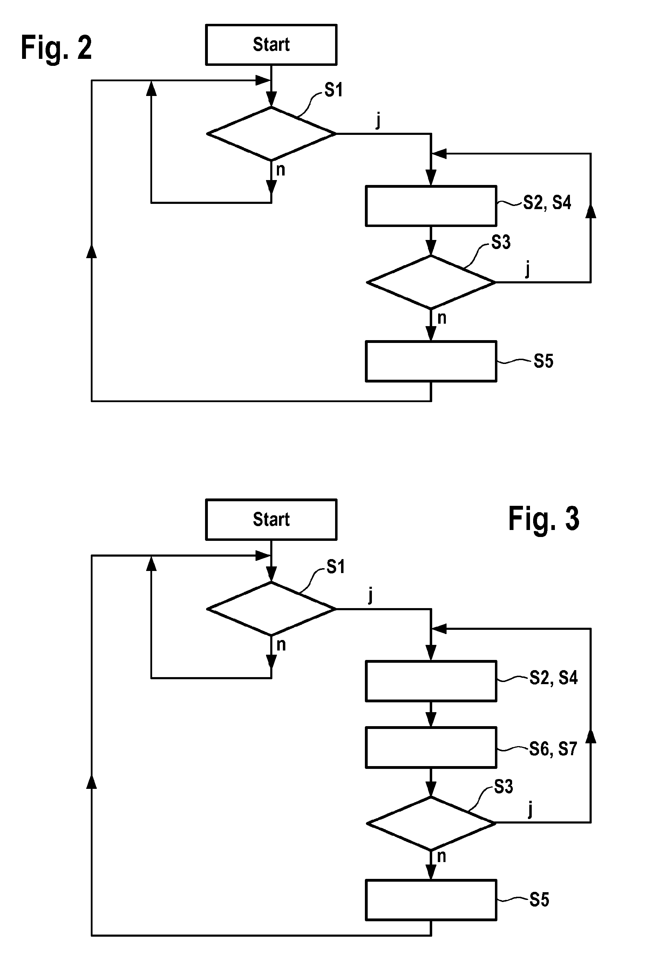

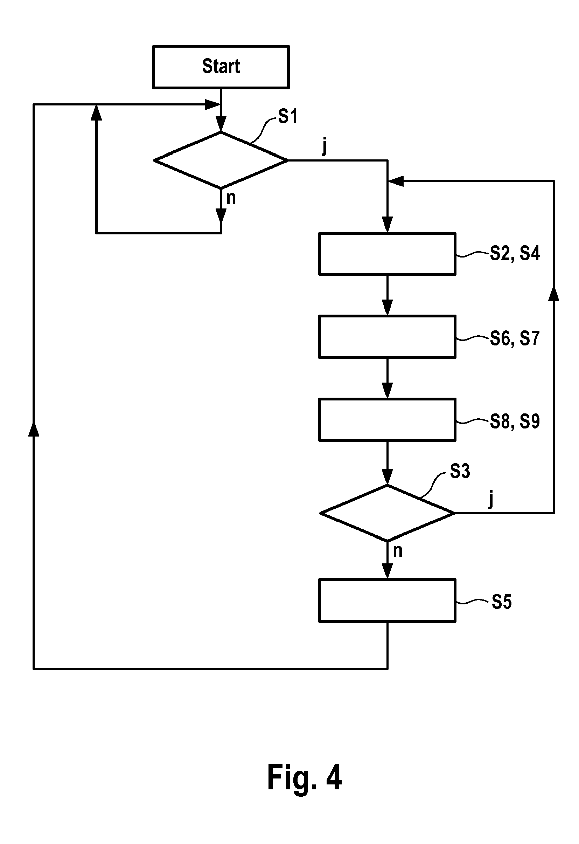

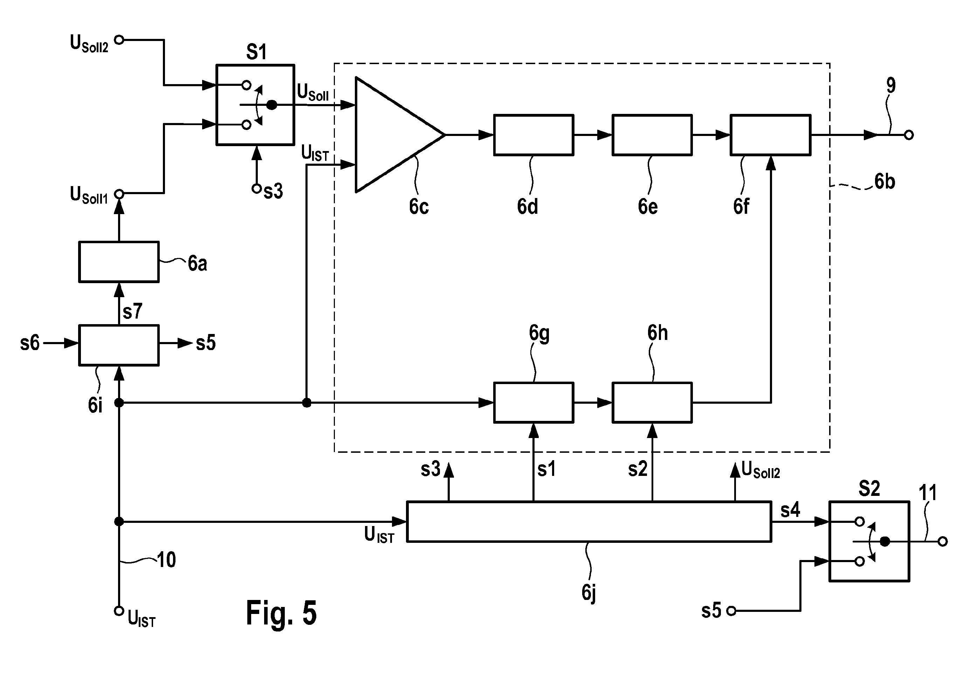

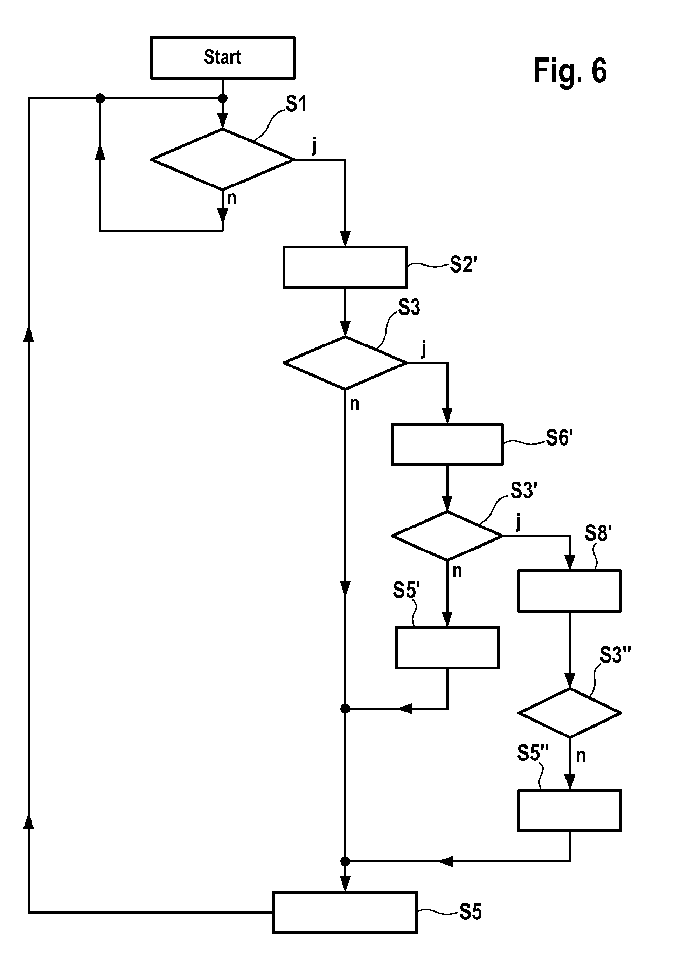

Die Figur 1 zeigt eine Blockdarstellung einer Vorrichtung zur Erläuterung des erfindungsgemäßen Verfahrens. Die Figur 2 zeigt ein Flussdiagramm zur Veranschaulichung eines ersten Ausführungsbeispiels für ein Verfahren gemäß der Erfindung. Die Figur 3 zeigt ein Flussdiagramm zur Veranschaulichung eines zweiten Ausführungsbeispiels für ein Verfahren gemäß der Erfindung. Die Figur 4 zeigt ein Flussdiagramm zur Veranschaulichung eines dritten Ausführungsbeispiels für ein Verfahren gemäß der Erfindung. Die Figur 5 zeigt eine Blockdarstellung zur Erläuterung der Arbeitweise der Energiemanagementeinheit 6 von Figur 1. Die Figur 6 zeigt ein Flussdiagramm zur Veranschaulichung eines vierten Ausführungsbeispiels für die Erfindung.

### Beschreibung

Die Figur 1 zeigt eine Blockdarstellung einer Vorrichtung zur Stabilisierung der Betriebsspannung in einem Kraftfahrzeug-Bordnetz. Dieses Bordnetz weist einen Verbrennungsmotor 1 auf, der einen Generator 2 antreibt. Bei dem Generator 2 handelt es sich um einen Klauenpolgenerator. Zur Regelung des Generators 2 ist ein Generatorregler 3 vorgesehen.

Bei diesem Generatorregler kann es sich um einen Anbauregler oder um einen Wegbauregler handeln. Bei einem Anbauregler befinden sich die Funktionen zur Spannungsregelung innerhalb des Anbaureglers. Der Anbauregler ist über eine digitale Schnittstelle 9 mit einer Energiemanagementeinheit 6 verbunden. Ein Wegbauregler beinhaltet lediglich die Endstufe zur Bestromung der Erregerwicklung des Generators. Die Funktionen zur Spannungsregelung befinden sich innerhalb der Energiemanagementeinheit 6. Das Steuersignal für die Endstufe wird direkt in der Energiemanagementeinheit 6 generiert und über eine Schnittstelle 9, bei der es sich in diesem Fall um eine analoge Schnittstelle (PWM-Schnittstelle) handelt, zum Wegbauregler 3 übertragen.

Mit dem Anschluss des Generators 2 ist der Pluspol der Fahrzeugbatterie 4 verbunden. Der Minuspol der Fahrzeugbatterie 4 liegt auf Masse. An die Batterie 4 ist eine Batteriesensorik 5 angeschlossen, die zur Erfassung der Batteriespannung U_{IST} vorgesehen ist. Alternativ dazu kann die Batteriesensorik 5 auch zur Erfassung des Batterieinnenwiderstandes vorgesehen sein. Das Ausgangssignal U_{IST} der Batteriesensorik 5 wird über eine Schnittstelle 10 an die Energiemanagementeinheit 6 weitergeleitet.

Bei der Energiemanagementeinheit 6 handelt es sich um ein Steuergerät, welches die Funktionen des elektrischen Energiemanagements wahrnimmt, beispielsweise um ein Motorsteuergerät, um einen Bodycomputer oder um ein Gateway-Steuergerät.

Der Pluspol der Batterie 4 ist weiterhin mit Schaltern verbunden, über welche sicherheitsrelevante und nicht sicherheitsrelevante Verbraucher 7 mit dem Bordnetz verbindbar sind. Diese Schalter können Bestandteile eines Verbrauchersteuergerätes 8 sein, welches mit der Energiemanagementeinheit 6 über eine Schnittstelle 11 verbunden ist. Außerhalb des Verbrauchersteuergerätes 8 können weitere Verbraucher vorgesehen sein, welche nicht über die Energiemanagementeinheit steuerbar sind.

Gemäß einer nicht in den Figuren dargestellten Ausführungsform können die Energiemanagementeinheit 6 und das Verbrauchersteuergerät 8 in Form eines einzigen Bausteins aufgebaut sein.

Im Betrieb des Kraftfahrzeugs erfolgt eine ständige Überwachung der momentanen Leistungsfähigkeit der zur Versorgung des Bordnetzes vorgesehenen Batterie 4 unter Verwendung der Batteriesensorik 5. Beispielsweise ist die Batteriesensorik zur Messung der Batterie-Istspannung U_{IST} vorgesehen. Der gemessene Batterie-Istspannungswert U_{IST} wird über die Schnittstelle 10 an die Energiemanagementeinheit 6 weitergeleitet. Diese detektiert anhand der Batterie-Istspannung U_{IST} und gegebenenfalls weiterer Parameter, ob die momentane Leistungsfähigkeit der Batterie dazu ausreicht, um im Fahrbetrieb die Spitzenlasten der elektrischen Systeme des Bordnetzes zu puffern. Ist dies nicht der Fall, dann leitet die Energiemanagementeinheit 6 Maßnahmen in die Wege, um die Betriebsspannung bzw. Bordnetzspannung des Kraftfahrzeugs zu stabilisieren.

Um zu erkennen, ob die momentane Leistungsfähigkeit der Batterie ausreichend ist, können beispielsweise die folgenden Vorgehensweisen alternativ verwendet werden:
- Es erfolgt eine Batteriezustandserkennung auf Basis der Auswertung der Spannungswelligkeit der Batterie-Istspannung oder einer Ersatzspannung für diese. Eine nicht ausreichende Leistungsfähigkeit und damit die Notwendigkeit der Einleitung eines Notlaufbetriebes wird dann detektiert, wenn die Spannungswelligkeit einen vorgegebenen Schwellenwert überschreitet.
- Es erfolgt eine umfangreiche Batteriezustanderkennung, bei welcher eine Auswertung des Batterieinnenwiderstandes hinsichtlich einer Überschreitung eines vorgegebenen Schwellenwertes erfolgt. Überschreitet der ermittelte Batterieinnenwiderstand den vorgegebenen Schwellenwert, dann wird auf die Notwendigkeit der Einleitung des Notlaufbetriebes geschlossen.
- Es erfolgt eine umfangreiche Batteriezustanderkennung, bei welcher eine Auswertung der Spannungsprädiktion hinsichtlich einer Überschreitung eines vorgegebenen Schwellenwertes erfolgt, wobei diese Auswertung in Abhängigkeit eines Laststromes vorgenommen wird. Die Notwendigkeit des Einleitens des Notlaufbetriebes wird dann erkannt, wenn die prädizierte Batterie-Istspannung kleiner ist als der vorgegebene Schwellenwert.

Ist bei der verwendeten Vorgehensweise eine Erfassung der Batteriespannung notwendig, dann kann diese auch durch eine Erfassung der Bordnetzspannung an einer beliebigen Messstelle im Bordnetz, beispielsweise direkt an den Klemmen der Energiemanagementeinheit 6 oder des Verbrauchersteuergerätes 8, erfolgen.

Wird anhand der verwendeten Vorgehensweise erkannt, dass die momentane Leistungsfähigkeit der Batterie nicht ausreicht, um im Fahrbetrieb die Spitzenlasten der elektrischen System des Bordnetzes zu puffern, dann wird der Notlaufbetrieb eingeleitet.

Ein Beispiel für einen derartigen Notlaufbetrieb ist in der Figur 2 gezeigt. Dort erfolgt nach dem Start des Verfahrens in einem Schritt S1 eine Detektion der momentanen Leistungsfähigkeit der zur Versorgung des Bordnetzes vorgesehenen Batterie. Ist die Batterie hinreichend leistungsfähig, dann sind keine weiteren Maßnahmen notwendig und es erfolgt über den Ausgang n ein Rücksprung auf den Eingang des Schrittes S1. Ist die Batterie hingegen nicht hinreichend leistungsfähig, dann erfolgt über den Ausgang j die Einleitung des Notlaufbetriebes durch einen Übergang zum Schritt S2.

In diesem Schritt S2 wird die Regeldynamik des Generators des Bordnetzes um eine Stufe erhöht. Danach erfolgt in einem Schritt S3 erneut eine Detektion der momentanen Leistungsfähigkeit der zur Versorgung des Bordnetzes vorgesehenen Batterie. Ist die Batterie hinreichend leistungsfähig, dann erfolgt über den Ausgang n ein Übergang zum Schritt S5, gemäß welchem die Regeldynamik des Generators des Bordnetzes wieder auf ihren ursprünglichen Wert herabgesetzt wird. Danach erfolgt ein Rücksprung auf den Eingang des Schrittes S1.

Wird im Schritt S3 hingegen detektiert, dass die Leistungsfähigkeit der Batterie nicht ausreichend ist, dann erfolgt über den Ausgang j eine Rücksprung auf den Schritt S4, gemäß welchem die Regeldynamik des Generators erneut um eine Stufe erhöht wird. Danach erfolgt eine erneute Abfrage, ob die Leistungsfähigkeit der Batterie ausreichend ist. Ist dies der Fall, dann erfolgt im Schritt S5 eine Herabsetzung der Regeldynamik auf ihren ursprünglichen Wert und dann ein Rücksprung auf den Eingang des Schrittes S1.

Ein zweites Ausführungsbeispiel für einen Notlaufbetrieb ist in der Figur 3 gezeigt. Das in der Figur 3 dargestellte Ausführungsbeispiel unterscheidet sich von dem in der Figur 2 dargestellten Ausführungsbeispiel dadurch, dass als zusätzliche Maßnahme zur Stabilisierung der Bordnetzspannung nach dem Schritt S2 in einem Schritt S6 eine Anhebung der Generatorsollspannung um einen vorgegebenen Spannungswert vorgenommen wird, beispielsweise um 1 Volt. Nach dem Schritt S6 erfolgt die bereits oben beschriebene Abfrage S3. Wird im Schritt S3 detektiert, dass die momentane Leistungsfähigkeit der Batterie nicht ausreicht, dann erfolgt über den Ausgang j ein Rücksprung und es wird im Schritt S4 die Regeldynamik erneut um eine Stufe und in einem Schritt S7 die Generatorsollspannung erneut um den vorgegebenen Spannungswert erhöht. Die bei diesem Ausführungsbeispiel zusätzlich zu einer Erhöhung der Regeldynamik vorgenommene Erhöhung der Generatorsollspannung führt zu einer weiteren Verbesserung der Stabilität der Betriebsspannung bzw. Bordnetzspannung.

Ein drittes Ausführungsbeispiel für einen Notlaufbetrieb ist in der Figur 4 gezeigt. Das in der Figur 4 dargestellte Ausführungsbeispiel unterscheidet sich von dem in der Figur 3 gezeigten Ausführungsbeispiel dadurch, dass als dritte Maßnahme zur Stabilisierung der Betriebsspannung die Grundlast des Generators gemäß einem Schritt S8 durch Zuschaltung eines weiteren Verbrauchers weiter verbessert wird. Nach dem Schritt S8 erfolgt die bereits oben beschriebene Abfrage S3. Wird im Schritt S3 detektiert, dass die momentane Leistungsfähigkeit der Batterie nicht ausreicht, dann erfolgt über den Ausgang j ein Rücksprung und es wird im Schritt S4 die Regeldynamik erneut um eine Stufe erhöht, in einem Schritt S7 die Generatorsollspannung erneut um den vorgegebenen Spannungswert erhöht und in einem Schritt S9 ein weiterer Verbraucher zugeschaltet. Die bei diesem Ausführungsbeispiel zusätzlich vorgesehene Zuschaltung von Verbrauchern führt zu einer weiteren Verbesserung der Stabilität der Betriebsspannung bzw. Bordnetzspannung.

Alternativ zu den oben in den Figuren 3 und 4 gezeigten Ausführungsbeispielen kann die Reihenfolge der Verfahrensschritte auch verändert werden. Beispielsweise kann die Erhöhung der Regeldynamik erst nach der Erhöhung der Sollspannung erfolgen. Ferner kann die Zuschaltung eines zusätzlichen Verbrauchers auch vor einer Erhöhung der Sollspannung vorgenommen werden.

Eine weitere Alternative besteht darin, die Generatorsollspannung in einem einzigen Schritt auf einen vorgegebenen Maximalwert zu erhöhen. Dieser Schritt kann vor oder nach dem Schritt S2 durchgeführt werden.

Eine weitere Alternative besteht darin, zur Anhebung der Grundlast des Generators einen oder mehrere Verbraucher des Bordnetzes in einem einzigen Schritt zuzuschalten. Dieser kann vor oder nach dem Schritt S2 durchgeführt werden.

Die Figur 5 zeigt eine Blockdarstellung zur Erläuterung der Arbeitsweise der Energiemanagementeinheit 6 von Figur 1.

Die Energiemanagementeinheit 6 weist zwei Betriebsarten auf. Die erste Betriebsart ist der Normalbetrieb. Die zweite Betriebsart ist der Notlaufbetrieb.

Die Energiemanagementeinheit 6 arbeitet im Normalbetrieb, wenn die momentane Leistungsfähigkeit der Batterie ausreichend ist, um im Fahrbetrieb die Spitzenlasten der elektrischen Systeme des Bordnetzes zu puffern. Ob die Leistungsfähigkeit der Batterie ausreichend ist, wird beispielsweise im Sinne einer der oben beschriebenen Verfahrensweisen ermittelt.

Im Normalbetrieb wird von einer Einheit 6a zur Sollspannungsvorgabe die Sollspannung U_{SOLL1} für den Generator 2 vorgegeben und über einen Schalter S1, der sich in seiner unteren Schaltstellung befindet, einem Generatorregelungsteil 6b der Energiemanagementeinheit 6 zugeführt. Alternativ zu der dargestellten Ausführungsform kann dieser Generatorregelungsteil auch im Generatorregler 3 positioniert sein, der dann als Anbauregler realisiert ist.

Der Generatorregelungsteil 6b weist einen Komparator 6c, ein erstes Digitalfilter 6d, eine Recheneinheit 6e, eine Ansteuerungseinheit 6f, einen Taktgeber 6g und ein zweites Digitalfilter 6h auf. Im Komparator 6c erfolgt ein Vergleich der von der Einheit 6a bereitgestellten Sollspannung U_{SOLL1} mit der von der Batteriesensorik 5 abgeleiteten Batterie-Istspannung U_{IST}. Das vom Komparator 6c ermittelte Differenzsignal wird dem ersten Digitalfilter 6d zugeführt und dort mit einem vorgegebenen Schwellenwert verglichen. Überschreitet das Differenzsignal den vorgegebenen Schwellenwert, dann erfolgt in der Recheneinheit 6e unter Verwendung eines dort abgespeicherten Regelalgorithmus eine Ermittlung eines Ansteuersignals für den Generator 2. Dieses wird von der Ansteuerungseinheit 6f an die Endstufe des Generatorreglers 3 weitergeleitet und von dieser zur Generatorregelung verwendet.

Der Ansteuerungseinheit 6f wird weiterhin ein vom Taktgeber 6g bereitgestelltes Taktsignal über das zweite Digitalfilter 6h zugeführt. Das zweite Digitalfilter ist auf eine hohe Zeitkonstante eingestellt. Der Taktgeber 6g erhält als Eingangssignal die Batterie-Istspannung U_{IST}.

Weiterhin weist die Energiemanagementeinheit 6 eine Verbrauchersteuerungseinheit 6i auf, welcher als Eingangssignale Schaltanfragesignale s6 für die Verbraucher 7 sowie die Batterie-Istspannung U_{IST} zugeführt werden. Die Verbrauchersteuerungseinheit 6i stellt ausgangsseitig Ansteuersignale s5 für das Verbrauchersteuergerät 8 zur Verfügung, welche von diesem zur individuellen Zu- bzw. Abschaltung einzelner Verbraucher verwendet werden. Weiterhin stellt die Verbrauchersteuerungseinheit 6i Ansteuersignale s7 für die Einheit 6a zur Sollspannungsvorgabe zur Verfügung. Die Ansteuersignale s5 werden dem Verbrauchersteuergerät 8 über einen Schalter S2, der sich im Normalbetrieb in seiner unteren Schaltstellung befindet, und die Schnittstelle 11 zugeführt.

Der Notlaufbetrieb wird dann eingeleitet, wenn erkannt wird, dass die momentane Leistungsfähigkeit der Batterie nicht mehr dazu ausreicht, um im Fahrbetrieb die Spitzenlasten der elektrischen Systeme des Bordnetzes zu puffern.

Die Ermittlung der Leistungsfähigkeit der Batterie erfolgt beim gezeigten Ausführungsbeispiel in einer Notlaufsteuerungseinheit 6j der Energiemanagementeinheit 6. Diese Notlaufsteuerungseinheit 6j erhält als Eingangssignal die von der Batteriesensorik ermittelte Batterie-Istspannung U_{IST} und ermittelt daraus die momentane Leistungsfähigkeit der Batterie nach einer der oben beschriebenen Verfahrensweisen.

Im Notlaufbetrieb, d. h. wenn die momentane Leistungsfähigkeit der Batterie nicht ausreicht, stellt die Notlaufsteuerungseinheit 6j Steuersignale s1, s2, s3, s4 sowie eine veränderte Sollspannung U_{SOLL2} für den Generator 2 zur Verfügung.

Mittels des Steuersignals s1 wird der Taktgeber 6g im Sinne einer Erhöhung des Takt-Tastverhältnisses beeinflusst. Das Steuersignal s2 beeinflusst die Zeitkonstante des zweiten Digitalfilters 6h. Diese Zeitkonstante, die im Normalbetrieb auf einen hohen Wert eingestellt ist, wird durch das Steuersignal s2 auf einen niedrigen Wert umgeschaltet, beispielsweise auf Null. Mittels des Steuersignals s3 erfolgt eine Umschaltung des Schalters S1 auf die von der Notlaufsteuerungseinheit bereitgestellte veränderte Sollspannung U_{SOLL2}. Das Steuersignal s4 ist zur Umschaltung des Schalters S2 von seiner unteren in seine obere Schalterstellung vorgesehen.

Mittels der Steuersignale s1 und s2 wird dabei die Regeldynamik des Generators 2 erhöht, mittels der Generatorsollspannung U_{SOLL2} die Generatorsollspannung um einen vorgegebenen Spannungswert erhöht und mittels des Steuersignals s4 die Grundlast des Generators durch Zuschaltung eines weiteren Verbrauchers, insbesondere eines nicht sicherheitsrelevanten Verbrauchers, erhöht.

Eine Alternative zu den in den Figuren 2, 3 und 4 gezeigten Ausführungsbeispielen ist in der Figur 6 gezeigt. Gemäß diesem alternativen Ausführungsbeispiel wird die Generatorregeldynamik in einem einzigen Schritt S2' auf einen vorgegeben Maximalwert erhöht. Danach erfolgt in einem Schritt S3 eine Detektion der momentanen Leistungsfähigkeit der zur Versorgung des Bordnetzes vorgesehenen Batterie. Ist die Batterie hinreichend leistungsfähig, dann erfolgt über den Ausgang n ein Übergang zum Schritt S5, gemäß welchem die Regeldynamik des Generators des Bordnetzes wieder auf ihren ursprünglichen Wert herabgesetzt wird. Danach erfolgt ein Rücksprung auf den Eingang des Schrittes S1.

Wird im Schritt S3 hingegen detektiert, dass die Leistungsfähigkeit der Batterie nicht ausreichend ist, dann erfolgt über den Ausgang j ein Sprung auf einen Schritt S6', gemäß welchem eine Anhebung der Generatorsollspannung auf einen vorgegebenen Maximalwert vorgenommen wird. Danach erfolgt in einem Schritt S3' erneut eine Detektion der momentanen Leistungsfähigkeit der Batterie. Ist diese hinreichend leistungsfähig, dann erfolgt in einem Schritt S5' eine Rücksetzung der Generatorsollspannung auf ihren ursprünglichen Wert. Danach erfolgt ein Übergang auf den Schritt S5 und von dort aus ein Rücksprung auf den Eingang des Schrittes S1.

Wird im Schritt S3' hingegen erkannt, dass die Leistungsfähigkeit der Batterie nicht ausreichend ist, dann erfolgt in einem Schritt S8' eine Anhebung der Grundlast des Generators durch eine Zuschaltung mehrerer Verbraucher in einem Schritt.

Dann erfolgt in einem Schritt S3" erneut eine Detektion der momentanen Leistungsfähigkeit der Batterie. Ist diese hinreichend leistungsfähig, dann erfolgt in einem Schritt S5" eine Rücksetzung der Generatorsollspannung auf ihren ursprünglichen Wert und eine Abschaltung der mehreren Verbraucher. Danach erfolgt ein Übergang auf den Schritt S5 und von dort aus ein Rücksprung auf den Eingang des Schrittes S1.

Alternativ zu dem in der Figur 6 gezeigten Ausführungsbeispiel kann die Anhebung der Grundlast des Generators auch vor der Anhebung der Generatorsollspannung vorgenommen werden.

Kann trotz aller vorstehend beschriebener Maßnahmen eine ausreichende Leistungsfähigkeit der Batterie nicht hergestellt werden, dann muss diese ausgetauscht werden. Dies gilt auch für die in den Figuren 2 - 4 gezeigten Ausführungsbeispiele.

## Patentansprüche

1. Verfahren zur Stabilisierung der Betriebsspannung in einem Kraftfahrzeug-Bordnetz mit folgenden Schritten:
S1) Detektion der momentanen Leistungsfähigkeit der zur Versorgung des Bordnetzes vorgesehenen Batterie;
S2) Beim Erkennen einer unzureichenden Leistungsfähigkeit der Batterie Einleiten eines Notlaufbetriebes mit einer Erhöhung der Regeldynamik des Generators des Bordnetzes;
S3) Detektion der momentanen Leistungsfähigkeit der zur Versorgung des Bordnetzes vorgesehenen Batterie;
S4) Beim Erkennen einer unzureichenden Leistungsfähigkeit der Batterie weitere Erhöhung der Regeldynamik des Generators.
S5) Beim Erkennen einer ausreichenden Leistungsfähigkeit der Batterie Herabsetzen der Regeldynamik des Generators auf ihren ursprünglichen Wert.

2. Verfahren nach Anspruch 1, **gekennzeichnet durch** folgenden weiteren Schritt:
S6) Anhebung der Generatorsollspannung um einen vorgegebenen Spannungswert vor oder nach Durchführung des Schrittes S2.

3. Verfahren nach Anspruch 1, **gekennzeichnet durch** folgenden weiteren Verfahrensschritt:
- Anhebung der Generatorsollspannung auf einen vorgegebenen Maximalwert vor oder nach Durchführung des Schrittes S2.

4. Verfahren nach einem der vorhergehenden Ansprüche, **gekennzeichnet durch** folgenden weiteren Schritt:
S8) Anhebung der Grundlast des Generators **durch** Zuschaltung eines weiteren Verbrauchers des Bordnetzes vor oder nach Durchführung des Schrittes S2.

5. Verfahren nach einem der Ansprüche 1 bis 3, **gekennzeichnet durch** folgenden weiteren Verfahrensschritt:
- Anhebung der Grundlast des Generators **durch** Zuschaltung mehrerer Verbraucher des Bordnetzes vor oder nach Durchführung des Schrittes S2.

6. Verfahren zur Stabilisierung der Betriebsspannung in einem Kraftfahrzeug-Bordnetz mit folgenden Schritten:
- Detektion der momentanen Leistungsfähigkeit der zur Versorgung des Bordnetzes vorgesehenen Batterie;
- Beim Erkennen einer unzureichenden Leistungsfähigkeit der Batterie Einleiten eines Notlaufbetriebes mit einer Erhöhung der Regeldynamik des Generators des Bordnetzes auf einen vorgegebenen Maximalwert;
- Detektion der momentanen Leistungsfähigkeit der zur Versorgung des Bordnetzes vorgesehenen Batterie;
- Beim Erkennen einer ausreichenden Leistungsfähigkeit der Batterie Herabsetzen der Regeldynamik des Generators auf ihren ursprünglichen Wert;
- Beim Erkennen einer unzureichenden Leistungsfähigkeit der Batterie Anhebung der Generatorsollspannung und/oder Anhebung der Grundlast des Generators durch Zuschaltung weiterer Verbraucher.

7. Vorrichtung zur Stabilisierung der Betriebsspannung in einem Kraftfahrzeug-Bordnetz, mit
- einem Generator (2),
- einem Generatorregler (3),
- einer zur Versorgung des Bordnetzes vorgesehenen Batterie (4),
- einer Batteriesensorik (5),
- einer Energiemanagementeinheit (6) und
- mehreren Verbrauchern,
**dadurch gekennzeichnet, dass**
- die Energiemanagementeinheit (6) eine Notlaufsteuerungseinheit (6j) aufweist, welche die Durchführung des Verfahrens nach einem der vorhergehenden Ansprüche steuert.

8. Vorrichtung nach Anspruch 7, **dadurch gekenn**- **zeichnet,** dass die Notlaufsteuerungseinheit mit der Batteriesensorik (5) verbunden und zur Detektion der momentanen Leistungsfähigkeit der Batterie anhand des Ausgangssignals der Batteriesensorik vorgesehen ist.

9. Vorrichtung nach Anspruch 7 oder 8, **dadurch ge- kennzeichnet**, dass die Notlaufsteuerungseinheit beim Erkennen einer unzureichenden Leistungsfähigkeit der Batterie die Regeldynamik des Generators erhöhende Steuersignale (s1, s2) ausgibt.

10. Vorrichtung nach Anspruch 9, **dadurch gekenn- zeichnet,** dass die Notlaufsteuerungseinheit beim Erkennen einer unzureichenden Leistungsfähigkeit der Batterie einem Taktgeber (6g) ein erstes Steuersignal (s1) zur Erhöhung des Takt-Tastverhältnisses des Generators und einem Filter (6h) ein zweites Steuersignal (s2) zur Herabsetzung der Zeitkonstanten des Filters zuführt.

11. Vorrichtung nach Anspruch 9 oder 10, **dadurch gekennzeichnet, dass** die Notlaufsteuerungseinheit beim Erkennen einer unzureichenden Leistungsfähigkeit der Batterie einen erhöhten Generator-Sollspannungswert (U_{SOLL2}) ausgibt.

12. Vorrichtung nach Anspruch 11, **dadurch gekenn- zeichnet,** dass die Notlaufsteuerungseinheit beim Erkennen einer unzureichenden Leistungsfähigkeit der Batterie ein Schaltsignal (s3) für einen Schalter (S1) ausgibt, über welchen einem Komparator (6c) entweder der erhöhte Generator-Sollspannungswert (U_{SOLL2}) oder ein nicht erhöhter Generator-Sollspannungswert (U_{SOLL1}) zuführbar ist.

13. Vorrichtung nach einem der Ansprüche 9 bis 12, **dadurch gekennzeichnet, dass** die Notlaufsteuerungseinheit beim Erkennen einer unzureichenden Leistungsfähigkeit der Batterie ein drittes Steuersignal (s4) ausgibt, welches zur Zuschaltung eines der Verbraucher vorgesehen ist.
